**Europäisches Patentamt**

(19) **European Patent Office**

**Office européen des brevets**

(11) Veröffentlichungsnummer: **0 059 301**
**A2**

(12) # EUROPÄISCHE PATENTANMELDUNG

(21) Anmeldenummer: **82100080.9**

(22) Anmeldetag: **08.01.82**

(51) Int. Cl.³: **G 21 C 17/06**

(30) Priorität: **27.02.81 DE 3107372**

(43) Veröffentlichungstag der Anmeldung:
**08.09.82 Patentblatt 82/36**

(84) Benannte Vertragsstaaten:
**BE CH FR GB IT LI SE**

(71) Anmelder: **NTG Nukleartechnik Gesellschaft m.b.H. u. Partner**
**Am Spielacker**
**D-6460 Gelnhausen-Hailer(DE)**

(72) Erfinder: **Ortmayer, Rudolf M.**
**Am Kauterain 1**
**D-6464 Linsengericht-Geislitz(DE)**

(72) Erfinder: **Pick, Werner**
**Ostring 7**
**D-6483 Salmünster(DE)**

(74) Vertreter: **Munderich, Paul, Dipl.-Ing.**
**Frankfurter Strasse 84**
**D-6466 Gründau-Rothenbergen(DE)**

(54) **Brennelementenkastenmessmaschine.**

(57) Die Erfindung betrifft eine Meßmaschine zur Kontrolle der äußeren Geometrie von Brennelementenkästen und Brennelementen durch Messung der Oberflächenveränderung über deren Querschnitt und über deren ganze Länge während der Lagerung der aktiven Elemente in Reaktoranlagen, d.h. in dem boriertes Wasser enthaltenden Lagerbecken.

Es ist Aufgabe der vorliegenden Erfindung, ein verschleiß- und erschütterungsfreies Abtasten der Oberflächengeometrie des Objektes zu sichern. Die erfindungsgemäße Lösung sieht vor, daß an dem Meßsupport ein Sensorträger ausgebildet ist und dieser mit berührungsfrei arbeitenden, Abstandsmaße aufnehmenden Sensoren ausgerüstet ist. Als Sensoren können z.B. Induktiv-Wirbelstromsensoren vorgesehen werden.

Durch die unmittelbare Ausbildung der Schlittenführung für den Meßsupport an der dem Objekt zugerichteten Seite der Meßmaschine wird die Einhaltung eines besonders geringen Abstandes der Meßebene ermöglicht, so daß Erschütterungen, wie sie z.B. durch Fremdeinfluß aus dem Antrieb des Supports resultieren können, nicht in positiver Richtung transformiert und die Meßergebnisse hierbei verfälscht werden.

EP 0 059 301 A2

./...

Fig.1

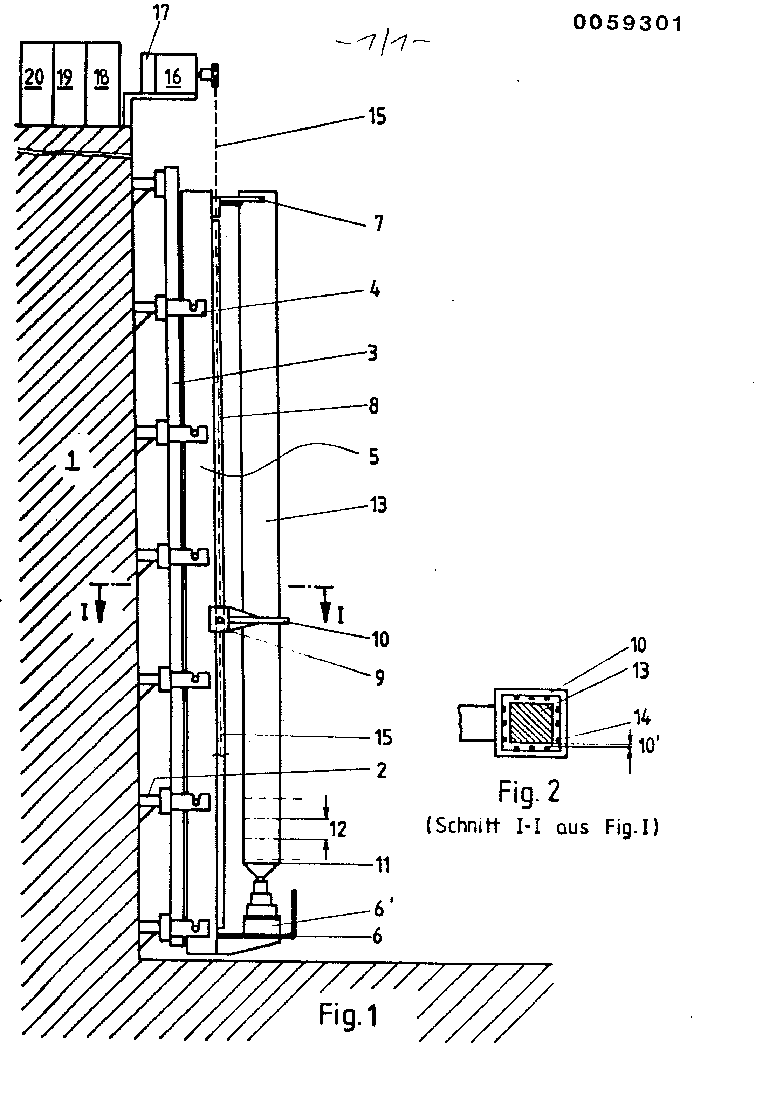

Fig. 2
(Schnift I-I aus Fig.1)

Die Erfindung betrifft eine Brennelementenkastenmeßmaschine zur Kontrolle der äußeren Geometrie von Brennelementenkästen und Brennelementen durch Messung der Oberflächenveränderung über deren Querschnitt und über deren ganze Länge während der Lagerung der aktiven Elemente in Reaktoranlagen , wobei die Brennelementenkästen in dem borierten Wasser des Brennelementlagerbeckens des Kernkraftwerkes eingesetzt sind.

Die mechanische Einrichtung besteht im wesentlichen aus der mit Aufnahmelaschen ausgerüsteten Trägerkonstruktion, in die die eigentliche Brennelementenkastenmeßmaschine eingehängt und in ihrer Lage gegen Aufschwimmen und Abheben sicher fixiert ist.

Die Trägerkonstruktion ist den denkbaren Beanspruchungen - die auch Erdbeben berücksichtigen müssen - relativ schwer ausgebildet und in einem Abstand von ca. 100 mm von der Brennelementlagerbecken-Wand über Distanzstücke gehalten.

Die Brennelementenkastenmeßmaschine ist dabei in aller Regel fußseitig mit einem Lagergestell und einer darauf angeordneten Aufnahmevorrichtung sowie kopfseitig und mittig mit einer Haltevorrichtung für den Einsatz des Brennelementenkastens versehen, wobei diese Einrichtungen so ausgebildet sind, daß eine verwindungsfrei axiale Ausrichtung des Brennelementenkastens möglich ist.

Unabhängig davon sind Kontrollvorrichtungen für den einwandfreien Sitz des Brennelementenkastens oder Brennelementes in der Brennelementenkastenmeßmaschine vorgesehen.

Der an einer Schlittenführung verfahrbare Mesupport ist dabei bei bekannten Meßmaschinen dieser Art mit Meßelementen ausgerüstet, die über die Oberflächen des Brennelementenkastens, bei Aufrechterhaltung eines Berührungskontaktes, gleiten. Die Berührung der Elemente, d.h. deren Auflage auf der Oberfläche , vermittelt dabei in Ausgangsstellung zunächst die Lage der Nullebene und damit die grundsätzliche Meßbereitschaft, während die weiteren Ablenkungen der Fühler an der Nullinie in Fahrbetrieb das unmittelbare Maß der Abweichungen, d.h. die Veränderungen der Brennelementkastenoberfläche geben. Diese Meßmethode ist im Hinblick auf die Einsatzbedingungen im Lagerbecken nicht als optimal zu bezeichnen. Jede Änderung der Meßlage des Fühlers in Fahr-Meßbetrieb ist mit einer mechanischen Beanspruchung verbunden,die einen unabwendbaren Verschleiß der Meßeinrichtung beinhaltet und auf dem Meßobjekt Spuren in Form von Kratzern hinterläßt. Dieser Verschleiß ist nicht nur im Hinblick auf den nach einer gewissen Einsatzzeit notwendig werdenden zeitaufwendigen Austausch störend, sondern beeinträchtigt auch die grundsätzliche Meßgenauigkeit bei einer so ausgerüsteten Maschine.

Geht man davon aus, daß der Anlenkpunkt des Fühlers eine konstante Lage, d.h. also echt fixiert ist, und der Fühler selbst als Schleppfühler ausgebildet ist, so wird mit zunehmendem Verschleiß der Ausschlagwinkel des Fühlers, bei gleichbleibendem Abstandsmaß, größer, d.h. es stellt sich ein Unterschied zwischen dem effektiv gegebenen und dem tatsächlichen, vorhandenen Abstand ein.

Dies bedeutet die Notwendigkeit eines öfteren Nachjustierens bzw. den zusätzlichen Einsatz von Steuergliedern, deren Regelimpuls z.B. vor Auflagedruck der
Fühler auf der Oberfläche des Brennelementenkastens
sein kann, wenn man berücksichtigt, daß bei üblichen
Schleppfühlern der Auflagedruck mit größer werdendem
Ausschlag geringer wird.

Diese Betrachtungen sollten auch für andere mechanisch wirksame Fühler in adäquater Weise gelten.

Diese Sachlage berücksichtigend ist es Aufgabe dieser
Erfindung, eine Brennelementenkastenmeßmaschine nach
der eingangs beschriebenen Art zu nennen, die ein verschleißfreies Abtasten der Oberflächengeometrie des
Brennelementenkastens bei sicherer Führung des Meßsupports über die ganze Meßlänge ermöglicht.

Die erfindungsgemäße Lösung dieser Aufgabe sieht vor,
daß an dem Meßsupport ein Sensorträger ausgebildet und
dieser mit berührungsfrei arbeitenden, Abstandsmaße aufnehmenden Sensoren ausgerüstet ist, und daß die zum
Brennelementenkasten gerichtete Seite der Brennelementenkastenmeßmaschine unmittelbar als Schlittenführung für
den Meßsupport ausgebildet ist.

Durch die Verwendung berührungsfrei ,
z.B. nach einem permanent magnetischen oder auch nach
beliebigen anderen Prinzipien , arbeitender Sensoren
wird diese Aufgabe vollständig gelöst, wobei die umittelbare Ausbildung der Schlittenführung für den Meßsupport an der dem Brennelementenkasten zugerichteten Seite der Brennelementenkastenmeßmaschine die Einhaltung eines besonders
geringen Abstandes der Meßebene ermöglicht. Ferner
hat dieses Verfahren den Vorteil, kleinste Vertiefungen und Kratzer zu integrieren, was bei einem
Meßfühler immer zu einer störenden Anzeige führt, die
unerwünscht ist.

Dadurch wird vermieden, daß fallweise denkbare Erschütterungen, wie sie z.B. durch Fremdstoffeinfluß
aus dem Antrieb resultieren können, nicht in positiver Richtung transformiert und die Meßergebnisse hierdurch verfälscht werden.
Um eine sichere Übertragung der Meßergebnisse zu ermöglichen, ist vorgesehen, daß für deren berührungsfreie Aufnahme Induktiv-Wirbelstromsensoren im Sensorträger angeordnet sind.

Zur Sicherung der Meßvorrichtung gegen Beschädigungen,
wie sie durch die Deformation des Brennelementenkastens
möglich sind, ist vorgesehen, daß der Abstand der im Sensorträger angeordneten Sensoren zum Brennelementenkasten
eine Vortaststrecke berücksichtigt.

Bei Unterschreiten der durch die Vortaststrecke gegebenen Grenzen wird ein optisch/akustisches Signal
veranlaßt, daß bei sich verkleinerndem Abstand einen
Alarm auslöst, der, nach einer entsprechenden Fahrstrecke, den Antrieb des Support stillsetzt.

Grundsätzlich ist vorgesehen, daß um den Querschnitt
des Brennelementenkastens etwa gleichmäßig verteilt,
eine Vielzahl von Sensoren im Sensorträger angeordnet
sind.

In der Praxis hat sich der Einsatz von je drei Sensoren pro Brennelementenkastenseite bzw. um den Umfang verteilt, zwölf Sensoren als ausreichend und vorteilhaft bestätigt.

Desweiteren ist vorgesehen, daß die durch die Sensoren abgegriffenen Meßimpulse über getrennte Meßkanäle durch eine Datenerfassung erfaßbar und in dieser zu realen Meßergebnissen umrechenbar sind, wobei diese Meßergebnisse ihrerseits durch einen Schreiber erfaßt und in einem Registriergerät gespeichert werden.

Im allgemeinen ist vorgesehen, daß als Schreiber ein UV-Lichtschreiber und als Registriergerät ein Lochstreifenstanzer verwendet wird.

Für die Ausbildung des Supportantriebes wird vorgeschlagen, daß dieser über eine rostfreie Gliederkette einschließende Getriebemittel motorisch erfolgt und der Antriebsmotor durch eine Zeit-Weg-Steuereinheit, die die getrennte Voreinstellung der Größe des Meßzeitintervalls und des Schrittlängenmaßes zuläßt.

Der Antriebsmotor ist ein mit einer vorgeordneten, selbsthemmenden Schneckenstufe ausgerüsteter Getriebemotor. Dieser verhindert bei Ausfall des Stromes od. dgl. Störungen ein Herunterfallen des Supports.

Die Erfindung wird durch die beigefügte schematische Darstellung einer Brennelementenkastenmeßmaschine näher erläutert:

Fig. 1 zeigt die Anordnung der Brennelementen-kastenmeßmaschine in einem Brenn-elementenlagerbecken.

Fig. 2 zeigt einen partiellen Schnitt durch Fig.1 und zwar durch den Brennelementenkasten mit Draufsicht auf den mit dem Meßsupport verbundenen Sensorenträger.

An der Brennelementenlagerbeckenwand 1 ist über Distanzstücke 2, die mit Aufnahmelaschen 4 ausgerüstete Tragkonstruktion 3 für die einhängbar lösbare Brennelementenkastenmeßmaschine 5 angeordnet. Diese ist ihrerseits wieder an ihrer Fußseite mit einem Lagergestell 6 mit darauf angeordneter Aufnahmevorrichtung 6' für den Brennelementenkasten bzw. für das Kopfstück des Brennelementes und oberseitig über eine mechanisch betätigbare Haltevorrichtung 7 Träger des Brennelementenkastens. Das Lagergestell 6 ist kugelgelagert, um in Verbindung mit der Aufnahmevorrichtung 6' und der Haltevorrichtung 7 eine verwindungsfreie axiale Ausrichtung des Brennelementenkastens 13 zu ermöglichen.

Desweiteren ist im Lagergestell 6 eine nicht gezeichnete mit einem Endschalter verbundene Kontaktplatte vorgesehen.

Die Betätigung dieses Endschalters zeigt an, ob das Brennelement bzw. der Brennelementenkasten 13 dem Lagergestell 6 richtig aufsitzt.

Die Brennelementenkastenmeßmaschine 5 ist an ihrer zum Brennelementenkasten 13 weisenden Fläche als Schlittenführung 8 für den mit einem Sensorträger 10 ausgerüsteten Meßsupport 9 ausgebildet. Dieser Meßsupport 9 ist nach beiden Richtungen verfahrbar. Die Lage der ersten Meßstelle, bei der der Meßvorgang eingeleitet wird, ist etwa 10 mm von der unteren Brennelementenkastenbegrenzung 11 nach oben versetzt. Die weiteren Messungen erfolgen in Abständen gleicher Schrittlänge 12 - üblicherweise 50 mm - nach oben führend in gleichen Zeitintervallen.

Der mit dem Meßsupport 9 verbundene austauschbare Sensorträger 10 umfaßt mit Abstand den Querschnitt des Brennelementenkastens 13. Die Meßwertaufnahme erfolgt berührungsfrei nach dem Induktiv-Wirbelstromverfahren.
Der Abstand der Sensoren 14 des Sensorträgers 10 im Querschnitt des Brennelementenkastens 13 berücksichtigt eine Vortaststrecke 10' von 3 mm, um Beschädigungen der Meßvorrichtung zu vermeiden. Zur Vorwarnung bei sich unzulässig verkleinerndem Abstand ist ein optisch/akustisches Alarmsignal vorgesehen.
Die Anordnung der Sensoren 14 im Sensorträger 10 erfolgt so, daß je Brennelementenkastenseite jeweils einer mittig von diesem ausgehend nach jeder Richtung in der Meßebene jeweils ein weiterer Sensor 14 abstandsgleich zum mittigen Sensor vorgesehen ist, d.h. insgesamt also 4 x 3 = 12 Sensoren 14 um den Brennelementenkasten 13 angeordnet sind, wobei bei einem Brennelementenkasten 13 mit einem Grundquerschnitt von 140 x 140 mm, die Abstände vom mittigen Sensor zu den beiden seitlichen jeweils 45 mm betragen.

Der Antrieb des Meßsupports erfolgt über eine umlaufende rostfreie Kette 15, die durch einen mit einer vorgeordneten Schneckenstufe ausgerüsteten Getriebemotors 16 angetrieben wird, wobei der Antrieb des Getriebemotors 16 durch eine einstellbare Weg-Zeit-Steuerung 17 beherrscht wird.

Die Auswertung der durch die Sensoren 14 vermittelten Meßimpulse zeigt jeweils das reale Meßergebnis an.

Die Übertragung der Meßwerte erfolgt über nicht gezeichnete Meßkabel durch eine Datenerfassung 18, wobei die Meßwerte seriell abgefragt und seriell/parallel ausgegeben werden können. Die Registrierung der Meßwerte erfolgt über einen UV-Lichtschreiber 19 und einen Lochstreifenstanzer 20, wobei folgende Arten aufgenommen werden:

Kanal 1 Uhrzeit und Datum
Kanal 2 Meßposition
Kanal 3 bis 14 Meßkanäle
Kanal 16 bis 20 Reservekanäle

Patentansprüche

1. Brennelementenkastenmeßmaschine zur Kontrolle der äußeren Geometrie von Brennelementenkästen durch Messung der Oberflächenveränderungen über deren Breite und über deren ganze Länge während der Lagerung der aktiven Elemente in Reaktoranlagen , wobei die Brennelementenkästen in dem borierten Wasser des Brennelementenlagerbeckens des Kernkraftwerkes eingesetzt sind, dadurch gekennzeichnet,

d a ß an dem Meßsupport (9) ein Sensorträger (10) ausgebildet und dieser mit berührungsfrei arbeitenden, Abstandsmaße aufnehmenden Sensoren (14) ausgerüstet ist, und

d a ß die zum Brennelementenkasten (13) gerichtete Seite der Brennelementenkastenmeßmaschine (1) unmittelbar als Schlittenführung (8) für den Meßsupport (9) ausgebildet ist.

2. Brennelementenkastenmeßmaschine nach Anspruch 1, dadurch gekennzeichnet,

d a ß für die berührungsfreie Aufnahme der Meßwerte Induktiv-Wirbelstromsensoren (14) im Sensorträger (10) angeordnet sind.

3.   Brennelementenkastenmeßmaschine nach Anspruch
     1 und 2, dadurch gekennzeichnet,

     d a ß   der Abstand der im Sensorträger (10) an-
     geordneten Sensoren (14) zum Brennelementen-
     kasten (13) eine Vortaststrecke (10') berücksichtigt.

4.   Brennelementenkastenmeßmaschine nach Anspruch
     1, dadurch gekennzeichnet,

     d a ß   um den Querschnitt des Brennelementenkastens (13) etwa gleichmäßig verteilt eine Vielzahl von Sensoren (14) im Sensorträger (10) angeordnet sind.

5.   Brennelementenkastenmeßmaschine nach Anspruch
     4, dadurch gekennzeichnet,

     d a ß   je Brennelementenkastenseite drei Sensoren (14) bzw. um den Umfang verteilt, zwölf
     Sensoren (14) angeordnet sind.

6.   Brennelementenkastenmeßmaschine nach Anspruch
     1 bis 5, dadurch gekennzeichnet,

     d a ß   die durch die Sensoren (14) abgegriffenen
     Meßimpulse über getrennte Meßkanäle durch eine
     Datenerfassung (18) erfaßbar und in dieser zu realen Meßergebnissen umrechenbar sind, wobei diese
     Meßergebnisse ihrerseits durch einen Schreiber (19)
     erfaßbar und durch ein Registriergerät (20) registrierbar sind.

7. Brennelementenkastenmeßmaschine nach Anspruch 6, dadurch gekennzeichnet,

d a ß als Schreiber (19) ein UV-Lichtschreiber und als Registriergerät (20) ein Lochstreifenstanzer verwendet wird.

8. Brennelementenkastenmeßmaschine nach Anspruch 1, dadurch gekennzeichnet,

d a ß der Antrieb des Supports (9) über eine rostfreie Gliederkette (15) einschließende Getriebemittel motorisch erfolgt und der Antriebsmotor (16) durch eine Zeit-Weg-Steuereinheit (17), die die getrennte Voreinstellung der Größe des Meßzeitintervalles und des Schrittlängenmaßes (12) zuläßt.

9. Brennelementenkastenmeßmaschine nach Anspruch 8, dadurch gekennzeichnet,

d a ß der Antriebsmotor (16) eine mit einer vorgeordneten, selbsthemmenden Schneckenstufe ausgerüsteter Getriebemotor ist.

0059301

-1/1-

Fig. 1

Fig. 2
(Schnitt I-I aus Fig. I)